(19) Europäisches Patentamt / European Patent Office / Office européen des brevets

(11) **EP 3 487 903 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(21) Anmeldenummer: **17736687.9**

(22) Anmeldetag: **12.07.2017**

(51) Int Cl.:
*C08G 18/72* (2006.01)   *C08G 18/73* (2006.01)
*C08G 18/76* (2006.01)   *C08G 18/79* (2006.01)
*C08G 18/22* (2006.01)   *C08G 18/32* (2006.01)

(86) Internationale Anmeldenummer:
**PCT/EP2017/067532**

(87) Internationale Veröffentlichungsnummer:
**WO 2018/015245 (25.01.2018 Gazette 2018/04)**

(54) **HOCHTEMPERATURSTABILE POLYISOCYANURATSCHAUMSTOFFE**

HIGH TEMPERATURE STABLE POLYISOCYANURATE FOAMS

MOUSSES DE POLYISOCYANURATE STABLES AUX TEMPERATURES ELEVEES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2016 EP 16180611**

(43) Veröffentlichungstag der Anmeldung:
**29.05.2019 Patentblatt 2019/22**

(73) Patentinhaber: **Covestro Intellectual Property GmbH & Co. KG**
**51373 Leverkusen (DE)**

(72) Erfinder:
• **BÖHNKE, Lutz**
  **51491 Overath (DE)**
• **ACHTEN, Dirk**
  **51375 Leverkusen (DE)**

(74) Vertreter: **Davepon, Björn**
**Patentanwaltskanzlei Davepon**
**Schloss Dyck**
**41363 Jüchen (DE)**

(56) Entgegenhaltungen:
**US-A1- 2011 082 226    US-A1- 2016 115 289**

**Beschreibung**

Die vorliegende Erfindung betrifft einen Polyisocyanuratschaumstoff, erhältlich durch Umsetzung eines Gemischs, in Gegenwart eines Katalysators und gegebenenfalls eines Initiators, umfassend oder bestehend aus:

A) eine Polyisocyanatkomponente enthaltend mindestens ein aliphatisches Polyisocyanat;

B) eine isocyanatreaktive Komponente enthaltend mindestens ein Polyol und/oder einen Alkohol sowie optional ein Amin;

C) mindestens ein Treibmittel;

D) mindestens einen Schaumstabilisator und

E) optional wenigstens ein Additiv.

Die Erfindung betrifft ferner ein Verfahren zur Herstellung eines solchen Schaumstoffs sowie dessen Verwendung.

Polyurethan- und Polyisocyanuratschäume auf Basis von aromatischen Isocyanaten gehören zu den besten Isoliermaterialien überhaupt. Hinsichtlich der Temperaturbeständigkeit werden Polyurethanschäume jedoch von vielen anderen Isoliermaterialien übertroffen. So weisen laut WO 2012/150201 A2 beispielsweise Oxazolidinonstrukturen enthaltene Schäume eine deutlich bessere Temperaturbeständigkeit auf.

Dass Isocyanuratgruppen thermisch deutlich beständiger sind als Urethangruppen ist seit langem bekannt (K. Wagner, Angew. Chem. 74, 1962, 799). Daher werden schon seit vielen Jahren Polyisocyanuratschäume für thermisch anspruchsvollere Isolierungen verwendet (Heat Resistant Rigid Foams by Trimerization of Isocyanate Terminated Prepolymers, Journal of Cellular Plastics, January 1965, Vol.1, No.1, 85-90, GB1137459A).

Heutzutage werden Polyurethan-Polyisocyanurat-(PUR-PIR) Hartschaumstoffe unter Verwendung zumindest eines Katalysators durch Umsetzung einer Polyol- mit einer Isocyanatkomponente in Gegenwart eines Treibmittels hergestellt. Weiterhin können auch Additive wie Schaumstabilisatoren und Flammschutzmittel zugesetzt werden. PUR-PIR-Hartschaumstoffe verfügen verglichen mit anderen Hartschaumstoffen, wie beispielsweise PUR-Hartschaumstoffen über eine deutlich bessere thermische Stabilität und verbesserte Brandeigenschaften (US 2003/0187085 A1). Die Ursache dieser verbesserten Eigenschaften wird Isocyanurat-Strukturelementen zugeschrieben.

Die Temperaturbeständigkeit der Polyisocyanuratschäume übersteigt die der Polyurethanschäume um ca. 30°C bis 40°C. Allerdings handelt es sich nicht - wie bereits oben erwähnt - um reine Polyisocyanuratschäume, sondern in Abhängigkeit von der Kennzahl, liegt der Isocyanuratanteil üblicherweise zwischen 40 und 75%. Das bedeutet aber, dass ein nicht unbeträchtlicher Anteil an Urethangruppen und bei wassergetriebenen Schäumen auch Harnstoffgruppen, neben den Isocyanuratgruppen vorliegt. Harnstoff- und Urethangruppen haben aber eine geringe Temperaturstabilität als Isocyanuratgruppen.

Um die Temperaturstabilität zu erhöhen wurden auch Polyisocyanurat-Schäume in einem Mehrstufenverfahren z.B. mit Epoxiden umgesetzt (z.B.: GB 1104394 und DE 3938062 A1). Nahezu reine aromatische Polyisocyanurate (Kennzahl / Index von 1600 bis 100.000) werden in WO 2007 / 042411 A1 beschrieben, wobei bevorzugt Wasser als Treibmittel eingesetzt wird. Dies hat aber zur Folge, dass der Schaum aus Polyharnstoff und Polyisocyanuraten besteht. Solche rein aromatischen Polyharnstoff-Polyisocyanuratschäume sind aber recht spröde.

Die Herstellung von Polyisocyanuraten (US 3645979 A) wird im Stand der Technik hauptsächlich ausgehend von flüssigen monomeren Diisocyanaten (z.B. Stearyldiisocyanat, Dodecyldiisocyanat, Decyldiisocyanat, Nonyldiisocyanat, Octyldiisocyanat, Hexamethylendiisocyanat (HDI), Butamethylendiisocyanat (BDI), Pentamethylendiisocyanat (PDI), Isophorondiisocyanat (IPDI), 4,4'-Diisocyanatodicyclohexylmethan (H$_{12}$MDI), Toluoldiisocyanat (TDI), Diphenylmethandiisocyanate (MDI) (4,4'-Diphenylmethandiisocyanat, 2,4'-Diphenylmethandiisocyanat, 2,2'-Diphenylmethandiisocyanat), Naphthalin-1,5-diisocyanat (NDI), 2,5-(und 2,6-)-Bis(isocyanatomethyl)bicyclo[2.2.1]heptan (NBDI)), aliphatischer wie aromatischer Natur beschrieben. Die Reaktionsenthalpie der Trimerisierungsreaktion zu Polyisocyanuraten ist mit -75 kJ/mol NCO sehr hoch. Dies führt insbesondere bei der Herstellung von Polyisocyanuratschäumen zu Problemen, da poröse Materialien im Allgemeinen und Schäume im Besonderen eine sehr geringe Wärmeleitfähigkeit besitzen und damit eine quasi adiabatische Reaktionsführung erfolgt, was zu einem starken Temperaturanstieg führt. Daher ist eine Reaktion ausgehend von monomeren Diisocyanaten, besonders bei monomeren Di- und Triisocyanaten mit hohem Isocyanatgehalt (z.B. BDI, PDI, HDI, TIN), nicht für großvolumige Schaumkörper, unter den dabei herrschenden nahezu adiabatischen Bedingungen durchführbar, sondern entweder nur in kleinen Substanzmengen oder unter strikter Temperaturkontrolle, d.h. beispielsweise mit einem kleinen Volumen-OberflächenVerhältnis wie dies in Formwerkzeugen oder im Doppeltransportbandverfahren ermöglicht werden kann.

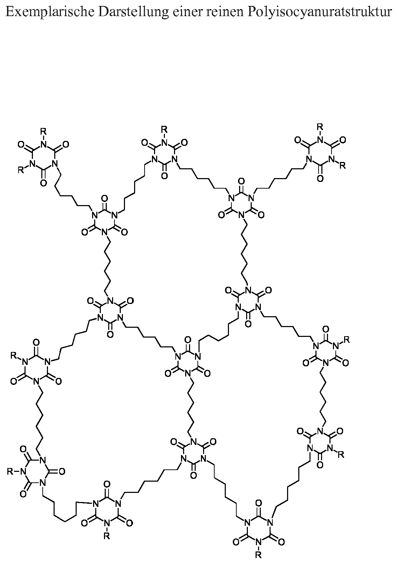

Die Aufgabe der vorliegenden Erfindung ist die Bereitstellung eines hochtemperaturstabilen Isolationsschaums (nachstehend auch bezeichnet als Polyisocyanuratschaumstoff oder Hartschaum) und dessen Herstellung nach einem Verfahrens das zur effizienten Erzeugung großvolumiger Schaumkörper geeignet ist, wobei die im Stand der Technik für Polyisocyanuratschäume beschriebene unkontrolliert starke Hitzentwicklung während der Reaktion vermieden wird, die mit einer unkontrollierten Schäumungsreaktion und damit qualitativ minderwertigen Schäumen bezüglich Wärmeisolationswirkung einher geht Der hochtemperaturstabile Polyisocyanuratschaum soll zudem bevorzugt bei ≤ 200°C einen Masseverlust von höchstens 2,0 %, bevorzugt 1,5 %, stärker bevorzugt 1,0 %, aufweisen, bestimmt mittels Thermogravimetrie in einem Temperaturbereich von 20 bis 200 °C mit einer Aufheizrate von 20 °C/ Minute in Stickstoffatmosphäre. Zudem soll das dem hochtemperaturstabilen Schaumstoff zugrundeliegende Reaktionsgemisch verfahrenssicher handhabbar sein. Abbildung 1 zeigt eine exemplarische Darstellung einer reinen Polyisocyanuratstruktur.

Diese Aufgabe wurde gelöst durch einen Polyisocyanuratschaumstoff erhältlich durch Umsetzung eines Gemischs, in Gegenwart eines Katalysators und gegebenenfalls eines Initiators, umfassend oder bestehend aus:

A) eine Polyisocyanatkomponente enthaltend mindestens ein aliphatisches Polyisocyanat;

B) eine isocyanatreaktive Komponente enthaltend mindestens ein Polyol und/oder einen Alkohol sowie optional ein Amin;

C) mindestens ein Treibmittel;

D) mindestens einen Schaumstabilisator und

E) optional wenigstens ein Additiv,

wobei das Gemisch dadurch gekennzeichnet ist, dass es eine Kennzahl von wenigstens 500, bevorzugt von wenigstens 1000, aufweist.

Die Kennzahl gibt NCO-reaktiven Äquivalente im Verhältnis zu den aktiven H-Funktionen, meist OH- oder NH-Äquivalente an (Kunststoffhandbuch 7, Polyurethane, 1983, S. 12).

Die Berechnung der Kennzahl, in nachstehender Gleichung Index genannt, erfolgt nach folgender Gleichung:

$$Index = \frac{100 \cdot NCO\_\ddot{A}quivalente}{OH\_\ddot{A}quivalente}$$

Der unbestimmte Ausdruck "ein" steht im Allgemeinen für "wenigstens ein" im Sinne von "ein oder mehr". Der Fachmann versteht je nach Situation, dass nicht der unbestimmte Artikel sondern der bestimmte Artikel "ein" im Sinne von "1" gemeint sein muss bzw. der unbestimmte Artikel "ein" auch in einer Ausführungsform den bestimmten Artikel "ein" (1) mit umfasst.

Es wurde überraschend gefunden, dass bei der Herstellung von Polyisocyanuratschäumen ausgehend von überwiegend aliphatischen Polyisocyanuraten im Vergleich zu der bekannten Verschäumung von monomeren aromatischen oder aliphatischen Isocyanaten mit hoher Kennzahl eine gut kontrollierbare Schäumungsreaktion möglich ist. Es können hochtemperaturstabile Schäume mit einer Wärmeleitfähigkeit im Bereich moderner PUR Hartschäume von < 0,05 W/(mK) bevorzugt < 0,04 W/(mK) und besonders bevorzugt < 0,035 W/(mK) und einer Rohdichte < 100 kg/m³, bevorzugt < 80 kg/m³ und besonders bevorzugt < 70 kg/m³ erhalten werden.

Ausgangsverbindungen für die Polyisocyanatkomponente A) für das erfindungsgemäße Verfahren sind bevorzugt Di- und Polyisocyanate mit aliphatisch, cycloaliphatisch und/oder araliphatisch gebundenen Isocyanatgruppen gegebenenfalls in Gegenwart von Polyisocyanaten, wobei vorzugsweise höchstens 30% aller Isocyanatgruppen aromatische Isocyanatgruppen sind. Solche Isocyanate werden typischerweise durch Phosgenierung hergestellt, können aber auch auf Phosgen freiem Weg, beispielsweise durch Urethanspaltung, hergestellt werden. In einem bevorzugten Fall werden die Produkte einer gezielten Trimerisierung von Diisocyanaten als bei Raumtemperatur (23°C) flüssige Ausgangsverbindungen eingesetzt (EP 0010589 A1, EP 0047452 A1).

Die Polyisocyanatkomponente A) weist vorzugsweise eine Viskosität gemäß DIN EN ISO 3219:1994-10 bei 23°C von 100 bis 30000 mPas auf, bevorzugt von 500 bis 25000 mPas, stärker bevorzugt von 800 bis 22500 mPas.

Es ist vorteilhaft, wenn mindestens 50 Gew.-%, insbesondere 70 Gew.-%, basierend auf dem Gesamtgewicht von A), aliphatische Isocyanate verwendet werden. Vorteilhaft sind Isocyanuratgruppen-haltige Polyisocyanate auf Basis von 1,6-Diisocyanatohexan (HDI) mit einem NCO-Gehalt < 25 Gew.-% und einer mittleren NCO-Funktionalität von > 2.

Vorteilhaft werden zur Kompatibilisierung, insbesondere in Gegenwart polarer, chemischer Treibmittel wie Wasser und/oder Ameisensäure, zumindest anteilmäßig hydrophilierte Isocyanuratgruppen-haltiges Polyisocyanate eingesetzt, bevorzugt > 1%, besonders bevorzugt > 3% ganz besonders bevorzugt > 5%. Solche hydrophilierten Isocyanuratgruppen-haltigen Polyisocyanate erhält man zum Beispiel durch Umsetzung von Polyisocyanuraten mit hydrophilen Verbindungen, die zumindest eine Isocyanat reaktive Gruppe tragen. Typische geeignete Verbindungen zur gezielten Hydrophilisierung von Isocyanaten sind dem Fachmann wohlbekannt zum Beispiel Polyether, Polyester und Sulfonsäuregruppen-tragende Verbindungen. Die Covestro Deutschland AG bietet solche Verbindungen unter dem Namen Bayhydur® für den Einsatz als Vernetzer in der Lackindustrie an.

Besonders bevorzugt ist eine Polyisocyanatkomponente A), die einen Anteil an monomeren Diisocyanaten in der Polyisocyanatzusammensetzung A) von höchstens 50 Gew.-%, vorteilhafter von höchstens 25 Gew.-% und insbesondere vorteilhaft von höchstens 10 Gew.-%, jeweils bezogen auf das Gesamtgewicht der Polyisocyanatkomponente A), aufweist. Die monomerarme Polyisocyanatkomponente A) und die darin enthaltenen oligomeren Polyisocyanate werden üblicherweise durch Modifizierung einfacher aliphatischer, cycloaliphatischer, araliphatischer und/oder aromatischer monomerer Diisocyanate oder Mischungen solcher monomeren Diisocyanate erhalten.

Aromatische Polyisocyanate (p-MDI) können ebenfalls gegebenenfalls zusätzlich eingesetzt werden, um beispielsweise die Glasübergangstemperatur zu erhöhen.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Besonders bevorzugt sind Polyisocyanate mit Anteilen von Isocyanuratgruppen von > 10 Gew.-%, ganz besonders bevorzugt > 20 Gew.-% in der Polyisocyanatkomponente A).

Unabhängig vom der zu Grunde liegenden oligomeren Struktur (Uretdion-, Isocyanurat-, Allophanat-, Biuret-, Iminooxadiazindion- und/oder Oxadiazintrionstruktur) weist die beim erfindungsgemäßen Verfahren einzusetzende Polyisocyanatkomponente A) und/oder die darin enthaltenen oligomeren Polyisocyanate vorzugsweise eine (mittlere) NCO-Funktionalität von 2,0 bis 6, vorzugsweise von 2,3 bis 4,0 auf.

Besonders bevorzugte Ergebnisse stellen sich ein, wenn die erfindungsgemäß einzusetzende Polyisocyanatkomponente A) einen Gehalt an Isocyanatgruppen von 15 bis 40 Gew.-%, vorzugsweise von 20 bis 30 Gew.-%, jeweils bezogen auf die gesamte Polyisocyanatzusammensetzung A), aufweist.

Geeignete kommerziell erhältliche Polyisocyanate sind unter anderem Desmodur XP 2675, Desmodur® XP 2489, Desmodur® N3300, Desmodur® N3600, Desmodur® 44M, Desmodur® H, Bayhydur® 3100, alle erhältlich von der Covestro Deutschland AG.

Die isocyanatreaktive Komponente B) enthält erfindungsgemäß mindestens ein Polyol und/oder einen Alkohol sowie optional ein Amin. Als Polyole werden bevorzugt Diole und Triole verwendet. Geeignete Polyole der isocyanatreaktive Komponente B) haben bevorzugt einen Siedepunkt bei 1bar von > 150°C.

Beispiele für bevorzugte Diole sind Ethylenglykol, Butylenglykol, Triethylenglykol, Diethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Besonders bevorzugt sind Glycerin, Ethylenglykol, Diethylenglykol, Propylenglykol, Butandiole, Neopentylglycol, Trimethylolpropan. Am stärksten bevorzugt ist Gycerin.

Geeignete Alkohole sind beispielsweise Monoole mit einem bis 6 Kohlenstoffatomen, vorzugsweise bis zu 4 Kohlenstoffatome, weiter bevorzugt Methanol, Ethanol, Isopropanol und oder n-Propanol. Besonders bevorzugt ist Methanol.

Als Amine können im Prinzip sämtliche dem Fachmann für die Verwendung in Polyurethanschäumen bekannte Verbindungen verwendet werden.

Die Menge des eingesetzten chemischen und/oder physikalischen Treibmittels C) hängt von der gewünschten Dichte des Schaums ab. Als Treibmittel kommen Wasser, Ameisensäure, Kohlenwasserstoffe (insbesondere c-Hexan, n-Hexan, c-Pentan, n-Pentan), halogenierte Kohlenwasserstoffe, Ester (insbesondere Methylformiat, Ethylformiat, Methylacetat, Ethylacetat). Eine Reduzierung der Dichte gelingt auch mit Hilfe von expandierbaren Microspheres wie Expancel oder durch Gas abspaltende Substanzen wie Azodicarbonamid.

Wird Wasser und/oder Ameisensäure als Treibmittel verwendet, so ist die Zugabe eines hydrophilen Isocyanatgruppen-haltigen Polyisocyanat zur Verbesserung der Kompatibilität sehr vorteilhaft. Das kommerziell erhältliche hydrophilierte Isocyanat Bayhydur 3100 (NCO-Gehalt: 17,4 %, mittlere NCO-Funktionalität: 3,2 (nach GPC), monomeres HDI: 0,1 %, Viskosität (23°C): 2800 mPas) der Covestro AG ist ein Beispiel für ein hydrophiles Isocyanuratgruppen-haltiges Polyisocyanat auf Basis von 1,6-Diisocyanatohexan (HDI). Andere hydrophile Isocyanatgruppen-haltige Polyisocyanate anderer Hersteller kommen hier ebenfalls in Betracht. Ebenso ist eine *in situ* Herstellung von hydrophilierten Isocyanaten vor oder während der Schäumungsreaktion durch Zusatz geeigneter mono oder polyfunktioneller hydrophiler Isocyanat-reaktiver Verbindungen wie z.B. Polyether und anderer dem Fachmann bekannten Verbindungen denkbar.

Zum Erzielen einer geringen Wärmeleitfähigkeit werden bevorzugt Kohlenwasserstoffe bzw. halogenierte Kohlenwasserstoffe verwendet. Besonders geeignet Kohlenwasserstoffe sind z.B. c-Hexan, n-Hexan, c-Pentan, n-Pentan, gut geeignet sind halogenierte Kohlenwasserstoffe, insbesondere aufgrund des hohen Ozonabbau-Potentials der früher breit eingesetzten Fluorchlorkohlenwasserstoffe, sind heute Fluorkohlenwasserstoffe einzusetzen wie z.B. 1,1,1,3,3-Pentafluorpropan (HFC-245fa), 1,1,1,3,3-Pentafluorbutan (HFC-365mfc), 1,1,1,2,3,3,3-Heptafluorpropan, 1,1,2,2,3,3,4,4,5,5,6,6-Dodecafluorcyclohexan, 1,1,2,2,3,3,4,4,5,5,6-Undecafluor-6-(trifluomethyl)cyclohexan, Ester wie z.B. Methylformiat, Ethylformiat, Methylacetat, Ethylacetat).

Halogenierten Kohlenwassersstoffe können vorteilhaft als alleiniges Treibmittel aber auch in Kombination mit zusätzlichen physikalischen Treibmitteln eingesetzt werden.

Bei der Bildung von Schaumstoffen aus Polyol/Wasser-Gemischen und Isocyanat bzw. Polyisocyanat werden bevorzugt katalysierte Systeme verwendet. In einer besonderes bevorzugten Ausführungsform wird die Isocyanuratbildung und die Kohlendioxidentwicklung bei der Bildung von Harnstoff mit den Katalysatoren aufeinander abgestimmt, damit das entstehende Gas zum Auftreiben des Isocyanurat-Urethan-Harnstoff-Schaumgerüstes genutzt werden kann. Dabei ist in einer besonderen Ausführungsform die Geschwindigkeit der Gerüst- und der Kohlendioxidbildung grö-ßer als die Diffusionsgeschwindigkeit von Kohlendioxid aus dem Schaumsystem, so dass nur eine kleine, unbedeutende Menge des Treibgases in einer relativ langsamen Diffusionsreaktion ungenutzt abdiffundiert. Die Kontrolle der Diffusionsreaktion ist dem Fachmann bekannt (Peter Atkins (1998), Physical Chemistry (6th edition), S. 825ff, Ann. Rev. Phys. Chem., 34, 493, 1983).

Insbesondere ist es beim erfindungsgemäßen Verfahren bevorzugt, dass der Katalysator (Trimerisierungskatalysator) ausgewählt ist aus der Gruppe bestehend aus:

Ammoniumformiat, Ammoniumacetat, Ammoniumoktanoat, Zinn-(II)-acetat, Zinn-(II)-octoat, Zinn-(II)-ethylhexanoat, Zinn-(II)-laurat, Dibutylzinndiacetat, Dibutylzinndilaurat, Dibutylzinnmaleat, Dioctylzinndiacetat, Natriumacetat, Natriumoctoat, Natriumethylhexanoat, Kaliumformiat, Kaliumacetat, Kaliumethylhexanoat, Kaliumoktoat, Natriumhydroxid, Natriummethanolat, Kaliummethanolat, Natriumethanolat, Kaliumethanolat und weitere Alkoholate sowie Mischungen davon, besonders bevorzugt aus der Gruppe bestehend aus Natriumacetat, Natriumoctoat, Natriumethylhexanoat, Kaliumformiat, Kaliumacetat, Kaliumethylhexanoat, Kaliumoktoat, Natriumhydroxid, Natriummethanolat, Kaliummethanolat, Natriumethanolat, Kaliumethanolat sowie Mischungen davon.

Erfindungsgemäße Hartschäume sind überwiegend bis vollständig geschlossenzellig. Außerdem sind feinzellige Hartschäume als Produkte des erfindungsgemäßen Verfahrens bevorzugt gegenüber grobzelligen. Aus diesem Grund ist erfindungsgemäß der Einsatz eines oder mehrerer Schaumstabilisatoren D) vorgesehen. Als Schaumstabilisatoren, speziell zur Erzeugung feinzelliger Schäume, eignen sich Silikontenside und bevorzugt Siloxan-Polyoxyalkylen-Copolymere und insbesondere Polydimethylsiloxan-Polyoxyalkylen-Copolymere. Auch andere Schaumstabilisatoren wie ethoxylierte Fettalkohole und Alkylphenole, Fettsäure-basierte Aminoxide und Betaine und Ricinusöl- bzw. Ricinolsäureester können als Schaumstabilisator verwendet werden, sowie auch Mischungen der vorgenannten Verbindungen. Von den Silikontensiden sind hydrophile, Ethylenoxid-reiche Polysiloxan-Polyoxyalkylen-Copolymere besonders bevorzugt. Diese sind beispielsweise unter den Handelsnamen Tegostab® B8421, Tegostab® B8490, Tegostab® B8444 (alle von Evonik Industries AG) im Handel erhältlich und eignen sich insbesondere für chemisch getriebene Schäume, also beispielsweise kombiniert mit dem Einsatz von Wasser und/ oder Ameisensäure als Treibmittel C). Bevorzugte hydrophobere Schaumstabilisatoren D) sind Propylenenoxid-reichere Polysiloxan-Polyoxyalkylen-Copolymere. Diese sind beispielsweise unter den Handelsnamen Tegostab® B84702-LV, Tegostab® B8870 im Handel erhältlich und eignen sich insbesondere für physikalisch getriebene Schäume, also solche, die unter Verwendung von beispielsweise Kohlenwasserstoffen und/ oder Fluorkohlenwasserstoffen als Treibmittel C) hergestellt werden.

Die erfindungsgemäße Herstellung der PIR-Hartschaumstoffe kann weiterhin unter Zuhilfenahme der dem Fachmann bekannten Additive E) bevorzugt Hilfs- und Zusatzstoffe, wie beispielsweise Flammschutzmittel, besonders bevorzugt Triethylphosphat (TEP), Tris(2-chlorisopropyl)phosphat (TCPP), Emulgatoren, Zusatzkatalysatoren wie 1,8-Diazabicyclo[5.4.0]undec-7-en (DBU), etc., erfolgen. Besonders bevorzugt umfassen die Additive E) ein Flammschutzmittel, insbesondere Triethylphosphat (TEP), Tris(2-chlorisopropyl)phosphat (TCPP).

Weitere Beispiele von gegebenenfalls erfindungsgemäß mit zu verwendenden Additiven E) sind Emulgatoren, Reaktionsverzögerer, Stabilisatoren gegen Alterungs- und Witterungseinflüsse, Weichmacher, anorganische flammhemmende Substanzen, phosphor- und/oder halogenhaltige organische Flammschutzmittel, fungistatisch und bakteriostatisch wirksame Substanzen, Pigmente und Farbstoffe sowie die an sich bekannten üblichen organischen und anorganischen Füllstoffe. Als Emulgatoren seien beispielsweise genannt ethoxylierte Alkylphenole, Alkalimetallsalze von Fettsäuren, Alkalimetallsalze von sulfatierten Fettsäuren, Alkalimetallsalze von Sulfonsäuren und Salze von Fettsäuren und Aminen. Nähere Angaben über Verwendungs- und Wirkungsweise der oben genannten Hilfs- und/oder Zusatzmittel sind z.B. im Kunststoff-Handbuch, Polyurethane, Band VII, Carl Hanser Verlag, München, Wien, 2. Auflage, 1983 beschrieben.

Erfindungsgemäß erfolgt die Verschäumung der einzelnen Komponenten zum PIR-Hartschaumstoff bei Mitverwendung einer Polyolkomponente B) bei Kennzahlen von 500 bis 5000, bevorzugt von 500 bis 4000, besonders bevorzugt von 500 bis 3000, insbesondere wenigstens 750, vorzugsweise wenigstens 1000, jeweils wahlweise kombiniert mit einer der vorgenannten Obergrenzen.

Besonders bevorzugt ist es, die Komponenten C) (physikalische Treibmittel: Kohlenwasserstoffe etc.) mindestens 5min bis 24 Stunden vor der Verschäumung mit der Polyisocyanatkomponente A) zu vermischen.

Besonders bevorzugt ist es, die Komponenten B), C), D) sowie gegebenenfalls E) vor der Verschäumung mit der Isocyanatkomponenten A) zu einer Isocyanat-reaktiven Zusammensetzung zu vermischen. Alternativ können aber auch bspw. Füllstoffe in das Isocyanatgemisch vermischt werden.

Der erfindungsgemäße Polyisocyanuratschaumstoff hat vorzugsweise eine Tg >80°C bevorzugt > 100°C außerdem bevorzugt < 200°C besonders bevorzugt < 180°C. Die Tg kann mittels DSC nach DIN EN ISO 11357-1 bestimmt werden.

## Beispiele

Die vorliegende Erfindung wird im Folgenden anhand von Beispielen näher erörtert:

Verwendete Bestimmungsverfahren:

Die mittlere NCO-Funktionalität der Komponente A) wird, sofern nicht anders beschrieben, mittels Gelpermeationschromatographie (GPC) bestimmt. Die Funktionalität ist ein Ausdruck für die Zahl der reaktiven Gruppen pro Molekül, d. h. für die Zahl der potentiellen Verknüpfungsstellen bei der Ausbildung eines Netzwerkes. Polyisocyanate, wie sie z, B. bei der Trimerisierung von Diisocyanaten gebildet werden, bestehen jedoch nicht nur aus einer definierten Molekülsorte, sondern enthalten eine breite Verteilung unterschiedlicher Moleküle mit unterschiedlichen Funktionalitäten. Als Bestimmungsgröße für die Polyisocyanate wird daher die mittlere Funktionalität angegeben. Die mittlere Funktionalität von Polyisocyanaten ist durch das Verhältnis von zahlenmittlerem Molekulargewicht und Äquivalentgewicht eindeutig bestimmt und wird im Allgemeinen aus der mit Hilfe der Gelpermeationschromatographie ermittelten Molekulargewichtsverteilung berechnet.

Die Viskosität der Komponente A) wird, sofern nicht anders beschrieben, gemäß DIN EN ISO 3219:1994-10 bei 23°C bestimmt.

Verwendete Komponenten:
Trimerisierungs-Katalysatoren

- DABCO K15: (Kalium-2-ethylhexanoat)

- Desmorapid: 1792 (Kaliumacetat)

- Natriummethanolat 25 Gew.-% in Methanol

Verwendetes Polyol B):

- Glycerin

Schaumstabilisatoren (Polyether-Polydimethylsiloxan-Copolymere):

- Tegostab® B8421:

- Tegostab® B8490

- Tegostab® B 84702 LV:

Verwendete Polyisocyanate A):

- Desmodur® N3300: Isocyanuratgruppen-haltiges Polyisocyanat auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23 °C)
- Desmodur® N3600: Isocyanuratgruppen-haltiges Polyisocyanat auf Basis von 1,6-Diisocyanatohexan (HDI) mit einem NCO-Gehalt von 23,2 %, einer mittleren NCO-Funktionalität von 3,2 (nach GPC), einem Gehalt an monomerem HDI von 0,2 % und einer Viskosität von 1200 mPas (23 °C)
- Desmodur® 44 M: 4,4'-Methylendiphenyldiisocyanat
- Desmodur® H: Hexamethylendiisocyanat

- Desmodur® 44V20L: Isocyanat auf Basis von Diphenylmethan-4,4'-diisocyanat (MDI) mit einem NCO-Gehalt von 30,5 - 32,5 und einer Viskosität von 160 - 240 mPas (25°C)
- Bayhydur® 3100: Hydrophiles Isocyanuratgruppen-haltiges Polyisocyanat auf Basis von 1,6-Diisocyanatohexan (HDI) mit einem NCO-Gehalt von 17,4 %, einer mittleren NCO-Funktionalität von 3,2 (nach GPC), einem Gehalt an monomerem HDI von 0,1 % und einer Viskosität von 2800 mPas (23 °C)

**Beispiel 1**:

Eine Isocyanat-reaktive Zusammensetzung aus 3,75 g Glycerin, 0,50 g Ameisensäure, 4,37 g Wasser, 2,10 g Schaumstabilisator Tegostab® B8421 und 3,00 g Katalysator Dabco® K15 wurde mit dem Isocyanatgemisch aus 200,40 g Desmodur® N3600, 28,63 Bayhydur® 3100 und 57,26 g Desmodur® H vermischt und in eine Form ausgegossen. Die Mischung selbst wurde mit einem Rührer bei 3730 U/min, 15 Sekunden Mischzeit und 23 °C Rohstofftemperatur hergestellt. Danach wurde die Form in einen Ofen bei 60°C gestellt. Der Schaum war nach 2 h abgebunden.

**Beispiel 2:**

Eine Isocyanat-reaktive Zusammensetzung aus 9,90 g Glycerin, 3,71 g Ameisensäure, 1 g Wasser, 2,10 g Schaumstabilisator Tegostab® B8421, 3,00 g Katalysator Desmorapid® 1792 wurde mit einem Isocyanatgemisch aus 140,15 g Desmodur® N3600, 140,15 g Desmodur® 44M vermischt und in eine Form ausgegossen. Danach wurde die Form in einen Ofen bei 60°C gestellt. Der Schaum war nach 12 min abgebunden. Anschließend erfolgte eine 2-stündige Temperung bei 60°C.

**Beispiel 3:**

Eine Isocyanat-reaktive Zusammensetzung aus 0,61 g Glycerin, 2,78 g Schaumstabilisator Tegostab® B84702 LV, 2,78 g Katalysator Natriummethanolat 25% gelöst in Methanol 75% wurde mit einem Isocyanat-Kohlenwasserstoffgemisch aus 272,12 g Desmodur® N3600 und 21,70 g Hexan vermischt und in eine Form ausgegossen. Das Isocyanat-Kohlenwasserstoffgemisch selbst wurde mit einem Rührer bei 3750 U/min und 23 °C Rohstofftemperatur ca. 1d vorher hergestellt. Danach wurde die Form in einen Ofen bei 70°C gestellt. Der Schaum war nach 4 min. abgebunden.

**Beispiel 4:**

Eine Isocyanat-reaktive Zusammensetzung aus 15,00 g Glycerin, 2,00 g Schaumstabilisator Tegostab® B8421, 34,24 g Katalysator Cobalt naphthenat (6%ig) und 2,85 g Dimethylsulfoxid (Eur. Polym. J., Vol 18, 549ff, 1982) wurde mit einem Isocyanat-Kohlenwasserstoffgemisch aus 161,84 g Desmodur N3600 und 69,36 g Desmodur® 44M und 14,70 g Hexan vermischt und in eine Form ausgegossen. Das Isocyanat-Kohlenwasserstoffgemisch selbst wurde mit einem Rührer bei 3750 U/min und 23 °C Rohstofftemperatur hergestellt. Danach wurde die Form in einen Ofen bei 60°C gestellt. Der Schaum war nach 6 min abgebunden. Anschließend erfolgte eine 2-stündige Temperung bei 60°C.

**Beispiel 5a:**

Eine Isocyanat-reaktive Zusammensetzung aus 1,08 g Glycerin, 1,44 g Schaumstabilisator Tegostab® B84702 LV, 2,88 g Katalysator Dabco® K15, 0,288 g Katalysator Natriummethanolat 25% gelöst in Methanol 75% wurde mit einem Isocyanat-Estergemisch aus 282,26 g Desmodur® N3600 und 12,06 g Methylformiat vermischt und in eine Form ausgegossen. Das Isocyanat-Kohlenwasserstoffgemisch selbst wurde mit einem Rührer bei 3750 U/min und 23 °C Rohstofftemperatur hergestellt. Danach wurde die Form in einen Ofen bei 105°C gestellt. Der Schaum war nach 38 min abgebunden. Anschließend erfolgte eine 2-stündige Temperung bei 70°C.

**Beispiel 5b:**

Eine Isocyanat-reaktive Zusammensetzung aus 1,08 g Glycerin, 1,44 g Schaumstabilisator Tegostab® B84702 LV, 2,88 g Katalysator Dabco® K15, 0,288 g Katalysator Natriummethanolat 25% gelöst in Methanol 75% wurde mit einem Isocyanat-Estergemisch aus 282,26g Desmodur® N3600 und 12,06 g Methylformiat vermischt und in eine Form ausgegossen. Das Isocyanat-Kohlenwasserstoffgemisch selbst wurde mit einem Rührer bei 3750 U/min und 23 °C Rohstofftemperatur hergestellt. Danach wurde die Form in einen Ofen bei 105°C gestellt. Der Schaum war nach 38 min abgebunden. Anschließend erfolgte eine 2-stündige Temperung bei 115°C.

**Beispiel 6:**

Eine Isocyanat-reaktive Zusammensetzung aus 1,13 g Glycerin, 1,51 g Wasser, 0,875 g Schaumstabilisator Tegostab® B8421, 1,25 g Katalysator Desmorapid® 1792 wurde mit einem Isocyanatgemisch aus 107,79 g Desmodur® 3600, 8,29 g Desmodur® XP2675 und 4,15 g Bayhydur® 3100 bei 3600 U/min gemischt und in eine Form ausgegossen. Danach wurde die Form in einem Ofen bei 80°C gestellt. Der Schaum war nach 40 min abgebunden. Anschließend erfolgte eine zweistündige Temperung bei 80°C.

**Vergleichsbeispiel 1:**

Eine Isocyanat-reaktive Zusammensetzung aus 72,07 g Stepanpol® PS-2325 (OH-Zahl: 240 mg KOH/g, Funktionalität: 2), 13,86 g TCPP (Tris(2-chlorisopropyl)phosphat), 1,85 g Schaumstabilisator Tegostab® B8421, 2,40 g Desmorapid® 1792, 0,83 g Jeffcat® DMCHA (Cyclohexyldimethylamin) und 1,11 g Wasser wurde mit einem Isocyanat-Kohlenwasserstoffgemisch aus 194,03 g Desmodur® 44V20L und 13,86 g c/i-Pentan (30/70) vermischt und in eine Form ausgegossen. Das Isocyanat-Kohlenwasserstoffgemisch selbst wurde mit einem Rührer bei 3750 U/min und 23 °C Rohstofftemperatur hergestellt. Danach wurde die Form in einen Ofen bei 60°C gestellt. Der Schaum war nach 30 s abgebunden.

Bestimmung des Massenverlustes bei Erwärmung:

Die nach Beispielen 1 bis 5b und Vergleichsbeispiel 1 erhaltenen Polyisocyanuratschaumstoffe wurden hinsichtlich ihres Massenverlustes bei Erwärmung untersucht. Die Versuche wurden in Stickstoffatmosphäre bei einer Aufheizrate von 20°C / Minute durchgeführt. Der Masseverlust wurde mittels Thermogravimetrie im Vergleich zur jeweiligen Ausgangsmasse bestimmt. Es wurde überraschend gefunden, dass die erfindungsgemäßen Polyisocyanuratschaumstoffe eine deutlich verbesserte Temperaturbeständigkeit aufweisen.

| Beispiel | Temperung | Beginn Massenverlust | Massenverlust bei 200°C | Massenverlust bei 250°C | Massenverlust bei 400°C |
|---|---|---|---|---|---|
| Beispiel 1 | 60°C, 2h | 195 °C | 0,8% | 1,9% | 10,5% |
| Beispiel 2 | 60°C, 2h | 230 °C | 0,9% | 1,4% | 24,0% |
| Beispiel 3 | 60°C, 2h | 190 °C | 0,8% | 1,6% | 5,6% |
| Beispiel 4 | 60°C, 2h | 200 °C | 0,9% | 6,7% | 29,0% |
| Beispiel 5a | 70°C, 2h | 250 °C | 0,8% | 1,6% | 5,5% |
| Beispiel 5b | 115°C, 2h | 250 °C | 0,4% | 0,6% | 3,7% |
| Beispiel 6 | 80°C, 2h | 245°C | 0,6% | 1,1% | 6,6% |
| Vergleichsbeispiel 1 | | 135 °C | 3,5% | 7,0% | 40,0% |

**Patentansprüche**

1. Polyisocyanuratschaumstoff, erhältlich durch Umsetzung eines Gemischs, in Gegenwart eines Katalysators und gegebenenfalls eines Initiators, umfassend:

   A) eine Polyisocyanatkomponente enthaltend mindestens ein aliphatisches Polyisocyanat;
   B) eine isocyanatreaktive Komponente enthaltend mindestens ein Polyol und/oder einen Alkohol sowie optional ein Amin;
   C) mindestens ein Treibmittel;
   D) mindestens einen Schaumstabilisator und
   E) optional wenigstens ein Additiv,

   **dadurch gekennzeichnet, dass**
   das Gemisch eine Kennzahl von wenigstens 500 aufweist.

**2.** Polyisocyanuratschaumstoff gemäß Anspruch 1, **dadurch gekennzeichnet, dass** die Polyisocyanatkomponente A) einen Anteil an aliphatischen Polyisocyanaten von wenigstens 50 Gew.-% bezogen auf die Polyisocyanatkomponente aufweist, insbesondere 70 Gew.-%.

**3.** Polyisocyanuratschaumstoff gemäß Anspruch 1 oder 2, **dadurch gekennzeichnet, dass** das aliphatische Polyisocyanat 1,6-Hexamethylendiisocyanat und/oder 1,5 Pentamethylendiisocyanat und/ oder Mischungen derselben und ggf. zusätzlich 4,4'-Methylendiphenyldiisocyanat umfasst.

**4.** Polyisocyanuratschaumstoff gemäß einem der vorstehenden Ansprüche, **dadurch gekennzeichnet, dass** die Polyisocyanatkomponente A) einen Anteil an Isocyanatgruppen von höchstens 40 Gew.-%, bezogen auf das Gesamtgewicht der Polyisocyanatkomponente A), aufweist.

**5.** Polyisocyanuratschaumstoff gemäß einem der vorstehenden Ansprüche, **dadurch gekennzeichnet, dass** die Polyisocyanatkomponente A) eine mittlere NCO-Funktionalität von 2,0 bis 6,0 aufweist.

**6.** Polyisocyanuratschaumstoff gemäß einem der vorstehenden Ansprüche, **dadurch gekennzeichnet, dass** die Polyisocyanatkomponente A) eine Viskosität gemäß DIN EN ISO 3219:1994-10 bei 23°C von 100 bis 30.000 mPas aufweist.

**7.** Polyisocyanuratschaumstoff gemäß einem der vorstehenden Ansprüche, **dadurch gekennzeichnet, dass** das Polyol der isocyanatreaktiven Komponente B) ein Molekulargewicht von weniger als 200 g/mol, bevorzugt weniger als 150 g/mol aufweist, stärker bevorzugt wobei das Polyol ausgewählt ist aus Glycerin, Ethylenglycol, Diethylenglycol, Propylenglycol, 1,3-Buntandiol, 1,4-Butandiol, Neopentylglykol, Trimethylolpropan oder Gemischen davon.

**8.** Polyisocyanuratschaumstoff gemäß einem der vorstehenden Ansprüche, **dadurch gekennzeichnet, dass** der Schaumstabilisator D) ausgewählt ist aus Silikontensiden, insbesondere Siloxan-Polyoxyalkylen-Copolymere, bevorzugt Polydimethylsiloxan-Polyoxyalkylen-Copolymere, ethoxylierten Fettalkoholen und Alkylphenolen, Fettsäure-basierten Aminoxiden und Betainen, Ricinusöl- und Ricinolsäureestern oder Gemischen davon.

**9.** Polyisocyanuratschaumstoff gemäß einem der vorstehenden Ansprüche, **dadurch gekennzeichnet, dass** das Additiv E) ausgewählt ist aus Flammschutzmitteln, Emulgatoren, Füllstoffen oder Gemischen davon.

**10.** Polyisocyanuratschaumstoff gemäß einem der vorstehenden Ansprüche, **dadurch gekennzeichnet, dass** das Gemisch eine Kennzahl von 500 bis 5000, bevorzugt 500 bis 4000, am stärksten bevorzugt 500 bis 3000 aufweist.

**11.** Polyisocyanuratschaumstoff gemäß einem der vorstehenden Ansprüche, **dadurch gekennzeichnet, dass** das Gemisch

80,0 bis 98,0 Gew.-% an Polyisocyanatkomponente A),
0,1 bis 10 Gew.-% an isocyanatreaktiver Komponente B),
1,0 bis 10 Gew.-% an Treibmittel C),
0,1 bis 3,0 Gew.-% an Schaumstabilisator D), und
0 bis 10 Gew.-% an Additiv(en) E)
enthält oder daraus besteht.

**12.** Polyisocyanuratschaumstoff gemäß einem der vorstehenden Ansprüche, **dadurch gekennzeichnet, dass** der Polyisocyanuratschaumstoff einen relativen Masseverlust von höchstens 2,0 %, bei ≤ 200°C aufweist, bestimmt mittels Thermogravimetrie in Stickstoffatmosphäre in einem Temperaturbereich von 20 bis 200 °C mit einer Aufheizrate von 20 °C/ Minute, insbesondere einen relativen Masseverlust von höchstens 1,5 %.

**13.** Polyisocyanuratschaumstoff gemäß einem der vorstehenden Ansprüche, **dadurch gekennzeichnet, dass** der Polyisocyanuratschaumstoff in einem zweistufigen Verfahren nach Reaktionstart bei < 100°C der Ausgangskomponenten vor Mischung im Anschluss an die Schäumungsreaktion bei einer Temperatur von wenigstens 60 °C über einen Zeitraum von mindestens 1 Stunde getempert wird.

**14.** Verfahren zur Herstellung eines Polyisocyanuratschaumstoff, bei dem man ein Gemisch in Gegenwart eines Katalysators und gegebenenfalls eines Initiators umsetzt, das die folgenden Komponenten umfasst oder daraus besteht:

A) eine Polyisocyanatkomponente enthaltend mindestens ein aliphatisches Polyisocyanat;

B) eine isocyanatreaktive Komponente enthaltend mindestens ein Polyol und/oder einen Alkohol sowie optional ein Amin;

C) mindestens ein Treibmittel;

D) mindestens einen Schaumstabilisator und

E) optional wenigstens ein Additiv,

**dadurch gekennzeichnet, dass**
das Gemisch eine Kennzahl von wenigstens 500 aufweist.

15. Verwendung des Polyisocyanuratschaumstoffs gemäß einem der Ansprüche 1 bis 13 als Isolationsmaterial, als Konstruktionselement, als Fassadenisolierung, als Reaktorisolierung, als Batterieisolierung, als Heißdampfisolierung, als Brennkesselisolierung, oder als witterungsbeständiges Isolationsmaterial.

**Claims**

1. Polyisocyanurate foam obtainable by reacting a mixture in the presence of a catalyst and optionally an initiator, comprising:

A) a polyisocyanate component comprising at least one aliphatic polyisocyanate;

B) an isocyanate-reactive component comprising at least one polyol and/or an alcohol and also optionally an amine;

C) at least one blowing agent;

D) at least one foam stabilizer and

E) optionally at least one additive,

**characterized in that**
the mixture has an index of at least 500.

2. Polyisocyanurate foam according to Claim 1, **characterized in that** the polyisocyanate component A) has a proportion of aliphatic polyisocyanates of at least 50% by weight, especially 70% by weight, based on the polyisocyanate component.

3. Polyisocyanurate foam according to Claim 1 or 2, **characterized in that** the aliphatic polyisocyanate comprises 1,6-hexamethylene diisocyanate and/or 1,5-pentamethylene diisocyanate and/or mixtures of the same and optionally additionally 4,4'-methylenediphenyl diisocyanate.

4. Polyisocyanurate foam according to any of the preceding claims, **characterized in that** the polyisocyanate component A) has a proportion of isocyanate groups of at most 40% by weight, based on the total weight of polyisocyanate component A).

5. Polyisocyanurate foam according to any of the preceding claims, **characterized in that** the polyisocyanate component A) has an average NCO functionality of 2.0 to 6.0.

6. Polyisocyanurate foam according to any of the preceding claims, **characterized in that** the polyisocyanate component A) has a viscosity in accordance with DIN EN ISO 3219:1994-10 at 23°C of 100 to 30 000 mPas.

7. Polyisocyanurate foam according to any of the preceding claims, **characterized in that** the polyol of the isocyanate-reactive component B) has a molecular weight of less than 200 g/mol, preferably less than 150 g/mol, more preferably wherein the polyol is selected from glycerol, ethylene glycol, diethylene glycol, propylene glycol, 1,3-butanediol, 1,4-butanediol, neopentyl glycol, trimethylolpropane or mixtures thereof.

8. Polyisocyanurate foam according to any of the preceding claims, **characterized in that** the foam stabilizer D) is selected from silicone surfactants, particularly siloxane-polyoxyalkylene copolymers, preferably polydimethylsiloxane-polyoxyalkylene copolymers, ethoxylated fatty alcohols and alkylphenols, fatty acid-based amine oxides and betaines, castor oil esters and ricinoleic acid esters or mixtures thereof.

9.  Polyisocyanurate foam according to any of the preceding claims, **characterized in that** the additive E) is selected from flame retardants, emulsifiers, fillers or mixtures thereof.

10. Polyisocyanurate foam according to any of the preceding claims, **characterized in that** the mixture has an index of 500 to 5000, preferably 500 to 4000, most preferably 500 to 3000.

11. Polyisocyanurate foam according to any of the preceding claims, **characterized in that** the mixture comprises or consists of

    80.0 to 98.0% by weight of polyisocyanate component A),
    0.1% to 10% by weight of isocyanate-reactive component B),
    1.0 to 10% by weight of blowing agent C),
    0.1 to 3.0% by weight of foam stabilizer D), and
    0 to 10% by weight of additive(s) E).

12. Polyisocyanurate foam according to any of the preceding claims, **characterized in that** the polyisocyanurate foam has a relative mass loss of at most 2.0% at $\leq 200°C$, determined by thermogravimetry in a nitrogen atmosphere in a temperature range from 20 to 200°C at a heating rate of 20°C/minute, especially a relative mass loss of at most 1.5%.

13. Polyisocyanurate foam according to any of the preceding claims, **characterized in that** the polyisocyanurate foam is heat treated in a two-stage process after start of reaction at < 100°C of the starting components before mixing subsequent to the foaming reaction at a temperature of at least 60°C over a period of at least 1 hour.

14. Process for producing a polyisocyanurate foam in which a mixture is reacted in the presence of a catalyst and optionally an initiator, which comprises or consists of the following components:

    A) a polyisocyanate component comprising at least one aliphatic polyisocyanate;
    B) a isocyanate-reactive component comprising at least one polyol and/or an alcohol and also optionally an amine;
    C) at least one blowing agent;
    D) at least one foam stabilizer and
    E) optionally at least one additive,

    **characterized in that**
    the mixture has an index of at least 500.

15. Use of the polyisocyanurate foam according to any of Claims 1 to 13 as an insulating material, as a construction element, as facade insulation, as reactor insulation, as battery insulation, as superheated steam insulation, as insulation for a still, or as weather-resistant insulating material.

**Revendications**

1.  Mousse de polyisocyanurate, pouvant être obtenue par mise en réaction d'un mélange, en présence d'un catalyseur et éventuellement d'un amorceur, comprenant :

    A) un composant polyisocyanate contenant au moins un polyisocyanate aliphatique ;
    B) un composant réactif avec les isocyanates, contenant au moins un polyol et/ou un alcool ainsi qu'en option une amine ;
    C) au moins un agent porogène ;
    D) au moins un stabilisant de mousse et
    E) en option au moins un additif,

    **caractérisée en ce que**
    le mélange présente un indice d'au moins 500.

2.  Mousse de polyisocyanurate selon la revendication 1, **caractérisée en ce que** le composant polyisocyanate A) présente une teneur en polyisocyanates aliphatiques d'au moins 50 % en poids, par rapport au composant polyisocyanate, en particulier 70 % en poids.

3. Mousse de polyisocyanurate selon la revendication 1 ou 2, **caractérisée en ce que** le polyisocyanate aliphatique comprend le diisocyanate de 1,6-hexaméthylène et/ou le diisocyanate de 1,5-pentaméthylène et/ou des mélanges de ceux-ci et éventuellement en outre le diisocyanate de 4,4'-méthylènediphényle.

4. Mousse de polyisocyanurate selon l'une quelconque des revendications précédentes, **caractérisée en ce que** le composant polyisocyanate A) présente une teneur en groupes isocyanate d'au maximum 40 % en poids, par rapport au poids total du composant polyisocyanate A).

5. Mousse de polyisocyanurate selon l'une quelconque des revendications précédentes, **caractérisée en ce que** le composant polyisocyanate A) présente une fonctionnalité NCO moyenne de 2,0 à 6,0.

6. Mousse de polyisocyanurate selon l'une quelconque des revendications précédentes, **caractérisée en ce que** le composant polyisocyanate A) présente une viscosité selon DIN EN ISO 3219:1994-10 à 23 °C de 100 à 30 000 mPa.s.

7. Mousse de polyisocyanurate selon l'une quelconque des revendications précédentes, **caractérisée en ce que** le polyol du composant B) réactif avec les isocyanates présente une masse moléculaire de moins de 200 g/mole, de préférence moins de 150 g/mole, de façon plus particulièrement préférée le polyol étant choisi parmi le glycérol, l'éthylèneglycol, le diéthylèneglycol, le propylèneglycol, le 1,3-butanediol, le 1,4-butanediol, le néopentylglycol, le triméthylolpropane ou des mélanges de ceux-ci.

8. Mousse de polyisocyanurate selon l'une quelconque des revendications précédentes, **caractérisée en ce que** le stabilisant de mousse D) est choisi parmi des tensioactifs silicone, en particulier des copolymères siloxane-polyoxyalkylène, de préférence des copolymères polydiméthylsiloxane-polyoxyalkylène, des alkylphénols et alcools gras éthoxylés, des bétaïnes et oxydes d'amines à base d'acides gras, des esters d'huile de ricin et d'acide ricinoléique ou des mélanges de ceux-ci.

9. Mousse de polyisocyanurate selon l'une quelconque des revendications précédentes, **caractérisée en ce que** l'additif E) est choisi parmi les agents ignifuges, les émulsifiants, les charges ou des mélanges de tels additifs.

10. Mousse de polyisocyanurate selon l'une quelconque des revendications précédentes, **caractérisée en ce que** le mélange présente un indice de 500 à 5 000, de préférence 500 à 4 000, de façon tout particulièrement préférée 500 à 3 000.

11. Mousse de polyisocyanurate selon l'une quelconque des revendications précédentes, **caractérisée en ce que** le mélange contient ou consiste en

    80,0 à 98,0 % en poids de composant polyisocyanate A),
    0,1 à 10 % en poids de composant B) réactif avec les isocyanates,
    1,0 à 10 % en poids d'agent porogène C),
    0,1 à 3,0 % en poids de stabilisant de mousse D), et
    0 à 10 % en poids d'additif(s) E).

12. Mousse de polyisocyanurate selon l'une quelconque des revendications précédentes, **caractérisée en ce que** la mousse de polyisocyanurate présente à ≤ 200 °C une perte de masse relative d'au maximum 2,0 %, déterminée par thermogravimétrie dans une atmosphère d'azote dans une plage de température de 20 à 200°C à une vitesse de chauffage de 20 °C/minute, en particulier une perte de masse relative d'au maximum 1,5 %.

13. Mousse de polyisocyanurate selon l'une quelconque des revendications précédentes, **caractérisée en ce que** la mousse de polyisocyanurate dans un procédé en deux étapes, après démarrage de la réaction à < 100 °C des composants de départ avant mélange est recuite à la suite de la réaction de moussage, à une température d'au moins 60 °C pendant une durée d'au moins 1 heure.

14. Procédé pour la production d'une mousse de polyisocyanurate, dans lequel on fait réagir un mélange en présence d'un catalyseur et éventuellement d'un amorceur, qui comprend ou consiste en les composants suivants :

    A) un composant polyisocyanate contenant au moins un polyisocyanate aliphatique ;

B) un composant réactif avec les isocyanates, contenant au moins un polyol et/ou un alcool ainsi qu'en option une amine ;
C) au moins un agent porogène ;
D) au moins un stabilisant de mousse et
E) en option au moins un additif,

**caractérisé en ce que**
le mélange présente un indice d'au moins 500.

15. Utilisation de la mousse de polyisocyanurate selon l'une quelconque des revendications 1 à 13 en tant que matériau d'isolation, en tant qu'élément de construction, en tant qu'isolation de façade, en tant qu'isolation de réacteur, en tant qu'isolation de batterie, en tant qu'isolation contre la vapeur surchauffée, en tant qu'isolation d'alambic, ou en tant que matériau d'isolation résistant aux agents atmosphériques.

Exemplarische Darstellung einer reinen Polyisocyanuratstruktur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012150201 A2
- GB 1137459 A
- US 20030187085 A1
- GB 1104394 A
- DE 3938062 A1
- WO 2007042411 A1
- US 3645979 A
- EP 0010589 A1
- EP 0047452 A1

**In der Beschreibung aufgeführte Nicht-Patentliteratur**

- **K. WAGNER.** *Angew. Chem.,* 1962, vol. 74, 799
- Heat Resistant Rigid Foams by Trimerization of Isocyanate Terminated Prepolymers. *Journal of Cellular Plastics,* Januar 1965, vol. 1 (1), 85-90
- Polyurethane. Kunststoffhandbuch. 1983, vol. 7, 12
- **PETER ATKINS.** Physical Chemistry. 1998, 825ff
- *Ann. Rev. Phys. Chem.,* 1983, vol. 34, 493
- Polyurethane. Kunststoff-Handbuch. Carl Hanser Verlag, 1983, vol. VII
- *Eur. Polym. J.,* 1982, vol. 18, 549ff